(19) Europäisches Patentamt
European Patent Office
Office européen des brevets

(11) EP 3 046 975 B1

(12) # EUROPÄISCHE PATENTSCHRIFT

(45) Veröffentlichungstag und Bekanntmachung des Hinweises auf die Patenterteilung:
**24.05.2017 Patentblatt 2017/21**

(21) Anmeldenummer: **14758108.6**

(22) Anmeldetag: **25.08.2014**

(51) Int Cl.:
***C09D 5/00*** *(2006.01)*

(86) Internationale Anmeldenummer:
**PCT/EP2014/067954**

(87) Internationale Veröffentlichungsnummer:
**WO 2015/039837 (26.03.2015 Gazette 2015/12)**

(54) **HYDROXYLGRUPPENHALTIGES SILIKON-POLYESTER-ACRYLAT-BINDEMITTEL**

HYDROXYL GROUP-CONTAINING SILICON-POLYESTER-ACRYLATE BINDERS

LIANT SILICONE-POLYESTER-ACRYLATE CONTENANT DES GROUPES HYDROXYLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2013 DE 102013218976**

(43) Veröffentlichungstag der Anmeldung:
**27.07.2016 Patentblatt 2016/30**

(73) Patentinhaber: **Evonik Degussa GmbH**
**45128 Essen (DE)**

(72) Erfinder:
- **HINZMANN, Dirk**
**50259 Pulheim (DE)**
- **LEYERS, Jessica**
**45357 Essen (DE)**
- **KLOTZBACH, Thomas**
**45257 Essen (DE)**
- **WOLFF, Bärbel**
**47441 Moers (DE)**
- **HERRWERTH, Sascha**
**45134 Essen (DE)**

(56) Entgegenhaltungen:
**EP-A2- 0 776 920**
**EP-A2- 1 247 823**
**US-B1- 6 281 321**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein hydroxylguppenhaltiges Silikon-Polyester-Acrylat-Bindemittel, Verfahren zu dessen Herstellung und seine Verwendung. Bindemittel für moderne Lacksysteme müssen eine Vielzahl von Anforderungen erfüllen. So müssen sie auf der einen Seite bestimmte lacktechnische Eigenschaften wie Kratzfestigkeit, Deckvermögen und Wetterbeständigkeit aufweisen, andererseits soll eine gute Verarbeitbarkeit, eine wirtschaftliche Herstellung und die Erfüllung gesetzlicher Auflagen gewährleistet sein.

EP 0006517 beschreibt Siloxan-modifizierte Bindemittel auf Basis von Polyacrylatharzen und Polyestern zur Herstellung von Überzugsmassen. Nachteil der dort beschriebenen Bindemittel ist, dass diese bei ausreichend niedrigen VOC-Werten (Volatile Organic Compound) häufig nicht mehr das gewünschte Eigenschaftsprofil besitzen, beispielsweise keine ausreichende Wetterbeständigkeit sowie Chemikalienbeständigkeit.

EP 1247823 beschreibt lösemittelhaltige Bindemittel, herstellbar durch Polymerisation einer Polyesterkomponente und einer Acrylatkomponente. Nachteil der dort beschriebenen Bindemittel ist, dass aufgrund zu hoher VOC-Werte umweltfreundliche Beschichtungen mit einem VOC-Gehalt < 250 g/L nicht realisierbar sind. Darüber hinaus sind solche Bindemittel mit einem Festkörpergehalt von mehr als 75 Gew.-% aufgrund zu hoher Viskosität nicht herstellbar.

Aufgabe der vorliegenden Erfindung ist die Bereitstellung verbesserter Bindemittel, die zur Bereitstellung langlebiger Beschichtungen eingesetzt werden können.

Die oben genannte komplexe Aufgabe wird durch Bindemittel gemäß Anspruch 1 gelöst.

Ein erster Gegenstand der vorliegenden Erfindung sind Bindemittel gemäss Anspruch 1 auf Basis eines Hydroxygruppen-funktionellen Acrylatharzes A), eines Alkoxy- und/oder Silanol-funktionellen Polysiloxans B), einer oder mehrerer Di- oder Polycarbonsäuren C) und einem oder mehreren Di- oder Polyolen D), wobei die Bestandteile A) bis D) im Bindemittel miteinander kondensiert vorliegen.

Die genannten Bindemittel sind erhältlich durch Polykondensation der oben genannten Bestandteile A) bis D).

Die erfindungsgemäßen Bindemittel haben den Vorteil, dass Bindemittel bereitgestellt werden, die die Nachteile des Standes der Technik überwinden. Insbesondere zeichnen sich die erfindungsgemäßen Bindemittel durch niedrige VOC-Werte von weniger als 250 g/L, insbesondere von weniger als 100 g/L im Lack aus. Weiterhin führen die erfindungsgemäßen Bindemittel bei Einsatz in Beschichtungen zu einer Erhöhung der Langlebigkeit, einem erhöhten Korrosionsschutz und einer erhöhten chemischen Beständigkeit der erzielten Beschichtungen.

Die erfindungsgemäßen Bindemittel bestehen im Wesentlichen aus vier Bestandteilen.

Bestandteil A) sind Hydroxygruppen-funktionelle Acrylatharze.

Die Hydroxygruppen-funktionellen Acrylatharze A) enthalten bzw. sind hergestellt aus mindestens einem Alkylester der Methacrylsäure, insbesondere der Methylmethacrylsäure, mindestens einem Hydroxyalkylester der Methacrylsäure, Acrylsäure und weiteren vinylisch ungesättigten Monomeren.

Die Hydroxygruppen-funktionelle Acrylatharze A) enthalten bzw. sind vorzugsweise hergestellt aus:

35 bis 50 Gew.-% aromatische Vinylverbindungen,
10 bis 25 Gew.-% einen oder mehrere Hydroxyalkylester der (Meth)acrylsäure,
5 bis 20 Gew.-% einen oder mehrere Alkylester der (Meth)acrylsäure,
3 bis 10 Gew.-% Acrylsäure und/oder Methacrylsäure und
12 bis 30 Gew.-% eines Glycidylesters einer gesättigten aliphatischen Monocarbonsäure mit 9 - 12 C-Atomen, die am alpha -Kohlenstoffatom verzweigt ist, ist, bevorzugt ein Glycidylester der Versaticsäure,
jeweils bezogen auf das Gesamtgewicht der Komponente A).

Die aromatische Vinylverbindung kann Styrol, alpha-Methylstyrol oder Vinyltoluol sein.

Als Hydroxyalkylester der Acrylsäure bzw. Methacrylsäure können erfindungsgemäß Hydroxyalkyl(meth)acrylatester mit 2 bis 5 Kohlenstoffatomen im Hydroxyalkylrest eingesetzt werden, wie beispielsweise Hydroxyethylacrylat, Hydroxyethylmethacrylat, Hydroxypropylmethacrylat, Hydroxypropylacrylat, Hydroxybutylmethacrylat, Hydroxybutylacrylat oder deren Mischungen.

Erfindungsgemäße Alkylester der (Meth)acrylsäure sind insbesondere Alkylester mit 1 bis 12 Kohlenstoffatomen im Alkylrest. Hierzu zählen beispielsweise Methylmethacrylat, Ethylhexylacrylat, Ethylmethacrylat, Isobornyl-Methacrylat, n-Butylacrylat, n-Butylmethacrylat, iso-Butylacrylat, iso-Butylmethacrylat, tert.-Butylacrylat und tert.-Butylmethacrylat.

Die Molmassen Mn der Komponente A) liegen im Bereich von 900 bis 4000 g/mol, vorzugsweise 1000 bis 3000 g/mol, besonders bevorzugt 1000 bis 2000 g/mol.
Die Hydroxylzahlen der eingesetzten Hydroxygruppen-funktionellen Acrylatharze liegen bevorzugt zwischen 85 bis 160 mg KOH/g.

Geeignete Hydroxygruppen-funktionellen Acrylatharze als Komponente A) sind beispielsweise die kommerziell erhältlichen Harze Synthalat™ A-TS 3737 (Fa. Synthopol), Synocure™ 9293 (Fa. Arkema) oder Joncryl™ SCX 507

(Fa. BASF).

Bestandteil B) der erfindungsgemäßen Bindemittel sind Alkoxy- und/oder Silanol-funktionelle Polysiloxane. Die eingesetzten Alkoxy- und/oder Silanol-funktionellen Polysiloxane weisen vorzugsweise ein Molekulargewicht Mn zwischen 300 und 5100 g/mol auf, vorzugweise zwischen 400 und 3000 g/mol, ganz besonders bevorzugt zwischen 450 und 1800 g/mol.

Die Bestimmung von Molekulargewichten erfolgt im Rahmen der vorliegenden Erfindung durch GPC-Messungen. Zur Bestimmung des gewichtmittleren Molekulargewichts Mw, des zahlenmittleren Molekulargewichts Mn sowie der Polydispersität Mw/Mn wurden folgende Messbedingungen eingehalten: Säulenkombination SDV 1000/10000 Å (Länge 65 cm), Temperatur 30 °C, THF als mobile Phase, Fließrate 1 ml/min, Probenkonzentration 10 g/l, RI-Detektor. Die Auswertung der Alkoxy- und/oder Silanol-funktionelle Polysiloxane erfolgte gegen Polystyrol-Standard (162-2.570.000 g/mol).

Insbesondere handelt es sich bei Komponente B) um nichtlineare, verzweigte, Alkoxy-funktionelle und/oder Silanol-funktionelle Polysiloxane, bevorzugt jene der allgemeinen Formel 1,

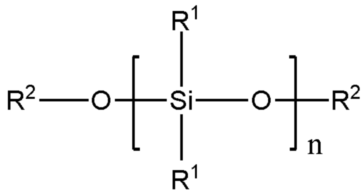

Formel 1

worin $R_1$ unabhängig voneinander Alkyl-, Aryl- oder Alkoxygruppen, Hydroxy- oder $-OSi(R_3)_3$-Gruppen sind, wobei $R_3$ unabhängig voneinander Alkyl-, Aryl-, Alkoxygruppen, Hydroxy oder $-OSi(R_3)_3$-Gruppen sein können,
und wobei $R_2$ unabhängig voneinander Wasserstoff, Alkylgruppen oder Arylgruppen sein können, bevorzugt Alkylgruppen, ganz besonders bevorzugt Methylgruppen oder Ethylgruppen, und $n > 1$ ist.

Insbesondere ist n in Formel 1 so ausgewählt, dass, je nach Art der ausgewählten Gruppen $R_1$, $R_2$ und gegebenenfalls $R_3$, das Molekulargewicht Mn des alkoxyfunktionellen und/oder Silanol-funktionellen Polysiloxans zwischen 300 bis 5100 g/mol, vorzugweise 400 bis 3000 g/mol, ganz besonders bevorzugt 450 bis 1800 g/mol ist.

Im Falle von Alkylgruppen handelt es sich vorzugsweise um lineare oder verzweigte Alkylgruppen mit 1 bis 18 C-Atomen, insbesondere handelt es sich um Methylgruppen.

Im Falle von Arylgruppen handelt es sich vorzugsweise um Arylgruppen mit 6 bis 18 C-Atomen, insbesondere handelt es sich um Phenylgruppen.

Im Falle von Alkoxygruppen handelt es sich vorzugsweise um lineare oder verzweigte Alkoxygruppen mit 1 bis 18 C-Atomen, insbesondere handelt es sich um Methoxygruppen oder Ethoxygruppen.

In Formel 1 ist $n > 1$, das heißt das alkoxyfunktionelle und/oder Silanol-funktionelle Polysiloxan weist mindestens zwei $-Si(R_1)_2-O$-Einheiten gemäß Formel 1 auf. In diesem Falle sind die Reste $R_1$ sowohl innerhalb als auch zwischen den einzelnen $-Si(R_1)_2-O$-Einheiten unabhängig voneinander aus den vorab genannten Gruppen wählbar, können also in beliebiger Art und Weise miteinander kombiniert werden.

Somit handelt es sich bei den bevorzugt eingesetzten Alkoxy-funktionellen und/oder
Silanol-funktionellen Polysiloxanen gemäß Formel 1 um (Phenyl)-Methylpolysiloxane, wobei methoxyfunktionelle oder ethoxyfunktionelle (Phenyl)-Methylpolysiloxane insbesondere bevorzugt sind.

Die Alkoxy-funktionellen und/oder Silanol-funktionellen Polysiloxane gemäß Formel 1 enthalten bevorzugt ungefähr 4 bis 70 Siliziumatome.

Die Alkoxy-funktionellen und/oder Silanol-funktionellen Polysiloxane gemäß Formel 1 können somit folgende Strukturelemente enthalten:

M, $M^{OR}$, D, $D^{OR}$, T, $T^{OR}$ und Q, wobei:

$M = [(R_4)_3SiO_{1/2}]$
$D = [(R_4)_2SiO_{2/2}]$
$T = [(R_4)SiO_{3/2}]$
$Q = [SiO_{4/2}]$
$M^{OR} = [(R_5)_{3-m} (R_4)_m SiO_{1/2}]$
$D^{OR} = [(R_5)_{2-p} (R_4)_p SiO_{2/2}]$
$T^{OR} = [(R_5)SiO_{3/2}]$ oder $[(R_4)SiO_{3/2}]$,
mit $R_5$ = aliphatischer oder aromatischer Alkoxyrest mit bis zu 18 C-Atomen oder Hydroxy, bevorzugt Methoxy oder Ethoxy,

$R_4$ = aliphatischer oder aromatischer Alkyl- oder Arylrest mit bis zu 18 C-Atomen, bevorzugt Phenyl oder Methyl,
m=0, 1, 2 oder 3
und p = 0, 1 oder 2.

Der Alkoxy- oder Silanolgehalt der Alkoxy- und/oder Silanol-funktionellen Polysiloxane ist zwischen 5 und 30 Gew.-%, bevorzugt zwischen 8 und 25 Gew.-%, ganz besonders zwischen bevorzugt 10 und 20 Gew.-%.

Als Komponente C) werden Di- oder Polycarbonsäuren eingesetzt, insbesondere aromatische, aliphatische oder cycloaliphatische Di- oder Polycarbonsäuren und ihre Derivate. wie z. B. Phthalsäureanhydrid, Isophthalsäure, Terephthalsäure, Adipinsäure, Maleinsäureanhydrid, Fumarsäure, Bernsteinsäureanhydrid, Hexahydrophthalsäureanhydrid, Methylhexahydrophthalsäureanhydrid Dimethylterephthalat, Naphthalindicarbonsäure, Cyclohexandicarbonsäure, Hexahydrophthalsäure, Bernsteinäure, Glutarsäure, Adipinsäure, Sebazinsäure, Azelainsäure, 1,12-Dodecandicarbonsäure und 1,14-Tetradecandicarbonsäure sowie deren Diester und Anhydride.

Bevorzugt werden Phthalsäureanhydrid, Isophthalsäure, Terephthalsäure bzw. Dimethylterephtalat, Adipinsäure, Maleinsäureanhydrid, Fumarsäure, Bernsteinsäureanhydrid, Hexahydrophthalsäureanhydrid, Methylhexahydrophthalsäureanhydrid als Komponente C) eingesetzt.

Als Komponente D) dienen Di- oder Polyole, insbesondere aliphatische Polyole wie z. B. Ethylenglykol, Propandiole [1,2 - und 1,3], Butandiol-1,4, Hexandiol-1,6, Neopentylglykol und andere Neodiole (Hydroxypivalinsäureneopentylglykolester; Trimethylpendandiol; Polyetherpolyole). Als mehrwertige Alkohole können z. B. Trimethylolpropan; Pentaerythritol, Di-Trimethylolpropan und andere eingesetzt werden. Als Beispiel für cycloaliphatische Polyole können Perhydrobisphenol A, Dimethylolcyclohexan und 3(4), 8(9)-Dihydroxymethyl-tricyclo[5.2.1.02.6]decan (TCD-Alkohol-DM) eingesetzt werden.

Darüber hinaus können der Komponente C) und D) auch Monocarbonsäuren und Monoalkohole zur Steuerung der Polykondensation zugesetzt sein. Geeignete Monocarbonsäuren sind beispielsweise Benzoesäure, Isononansäure, 2-Ethylhexansäure, Versaticsäure oder gesättigte oder ungesättigte Fettsäuren, geeignete Monoalkohole sind z. B. 1-Octanol, Dodecanol, Hexadecanol, 2-Ethylhexanol, 2-Octyldodecan-1-ol.

Aus den vorab genannten Komponenten wird das erfindungsgemäße Bindemittel hergestellt. Bei dem erfindungsgemäßen Bindemittel handelt es sich um ein Silikon-Acrylat-Polyester-Hybrid-Bindemittel. Der Begriff Silikon-Hybrid Bindemittel ist definiert als Zusammensetzung aus einem alkoxy- oder silanolfunktionellem verzweigtem Polysiloxan, welches über Si-O-C oder Si-C Verknüpfungen mit organischen Gruppen oder Harzen verbunden ist. Die chemische Anbindung der organischen Bausteine wie z. B. ein- oder mehrwertige Alkohole/Polyole sowie die Anbindung der OH-funktionellen Polyacrylate erfolgt über die Alkoxy- oder Silanolgruppen des Polysiloxans unter Ausbildung einer Si-O-C Bindung.

Das erfindungsgemäße Bindemittel setzt sich in Summe zusammen aus einer Acrylatkomponente A), einer Siloxankomponente B) und einer Polyesterkomponente aus C) und D). Gemäss der vorliegenden Erfindung setzt sich das erfindungsgemäße Bindemittel zusammen aus 10 bis 50 Gew.-% Komponente B) und 50 - 90 Gew.-% einer Kombination aus Komponente A) und der Polyesterkomponente aus C) und D), bezogen auf den Festkörpergehalt der Bindemittel.

Das Gewichtsverhältnis von Komponente A) zu dem Polyesterbestandteil aus den Komponenten C) und D) beträgt insbesondere 1 : 9 bis 9 : 1, bevorzugt 3 : 7 bis 7 : 3. Der Anteil eines Monoalkohols oder einer Monocarbonsäure beträgt insbesondere 2 bis 20 Gew.-%, bezogen auf die Gesamtmenge aller Komponenten. Die genannten Gewichtsanteile betragen in Summe 100 Gew.-%.

Ein weiterer Gegenstand der vorliegenden Erfindung ist ein Verfahren zur Herstellung von Bindemitteln gemäß der vorliegenden Erfindung, wobei ein Hydroxygruppen-funktionelles Acrylatharz A), ein Alkoxy- und/oder Silanolfunktionelles Polysiloxan B), eine oder mehrere Di- oder Polycarbonsäuren C) und ein oder mehrere Di- oder Polyole D) über eine Polykondensation miteinander zur Umsetzung gebracht werden.

Das erfindungsgemäße Verfahren erfolgt vorzugsweise in einer sogenannten "Eintopfsynthese" bei Temperaturen von 80 - 260 °C, vorzugsweise bei 180 - 230 °C, das heißt die vorab genannten Komponenten A) bis D) werden bei den genannten Temperaturen miteinander umgesetzt.

Zusätzlich kann bei der Polykondensationsreaktion der Komponenten A) bis D) ein Veresterungskatalysator, wie z. B. Lewis Säuren, Säuren oder Basen eingesetzt werden. Typische Katalysatoren sind Organotitan- oder-zinnverbindungen wie Tetrabutyltitanat oder Dibutylzinnoxid. Denkbar sind auch Katalysatoren, die auf anderen Metallen wie z. B. Zink oder Antimon basieren sowie metallfreie Veresterungskatalysatoren. Die Menge des zugesetzten Katalysators beträgt in der Regel 0,01 bis 1,0 Gew.-%, vorzugsweise 0,05 bis 0,3 Gew.-%, bezogen auf die Gesamtmenge der Komponenten A) bis D).

Während der Polykondensationsreaktion werden das entstehende Wasser sowie der Alkohol vollständig abdestilliert. Dies kann beispielsweise durch azeotrope Destillation erfolgen. Die erfindungsgemäße Polykondensationsreaktion wird solange durchgeführt bis die angestrebten Werte für Hydroxy- und Säurezahl erreicht sind. Das erhaltene lösemittelfreie Polykondensationsprodukt stellt eine hochviskose, klebrige oder feste Masse dar, die je nach Zusammensetzung unterschiedliche Viskositäten, Hydroxylzahlen und Säurezahlen aufweist.

Die gewünschte OH-Zahl für das erfindungsgemäße Bindemittel liegt im Bereich von 80 bis 300 mg KOH/g, vorzugsweise im Bereich von 150 bis 230 mg KOH/g. Die Bestimmung der OH-Zahl erfolgt titrimetrisch. Die Probe wird mit Essigsäureanhydrid in Gegenwart von Pyridin acetyliert. Pro Hydroxylgruppe entsteht ein Mol Essigsäure; während das überschüssige Essigsäureanhydrid zwei Mol Essigsäure liefert.
Der Verbrauch an Essigsäure wird titrimetrisch aus der Differenz zwischen Haupt- und einem parallel durchzuführenden Blindwert ermittelt. Unter Berücksichtigung der verbrauchten ml 0,5 n Kalilauge im Haupt- und Blindversuch sowie der Säurezahl der Probe und der Einwaage, wird die Hydroxylzahl errechnet.

$$OHZ = \frac{(b - a) \text{ x } 28{,}05}{E} + SZ$$

a = verbrauchte ml 0,5 n Kalilauge im Hauptversuch
b = verbrauchte ml 0,5 n Kalilauge im Blindversuch
E = Einwaage in g

Die gewünschte Säurezahl für das erfindungsgemäße Bindemittel liegt im Bereich von 0,1 bis 20 mg KOH/g, vorzugsweise im Bereich von 1 bis 10 mg KOH/g, ganz besonders bevorzugt 1,5 bis 7 mg KOH/g. Die Bestimmung der Säurezahl erfolgt ebenfalls titrimetrisch. Die Säurezahl gibt an wie viel mg KOH notwendig ist, um die in 1 g Fettsäure enthaltenen freien Fettsäuren zu neutralisieren. Eine geeignete Einwaage wird in ein Becherglas eingewogen, in ca.100 ml neutralisiertem Ethanol gelöst und mit Natronlauge potentiometrisch bis zum Endpunkt titriert. Die Auswertung der Säurezahl wird wie folgt bestimmt:

$$SZ\left[mgKOH/g\right] = \frac{V \times 56.1 \times n \times f}{E}$$

V = Verbrauch Titrant (ml)
n = Normalität Titrant
MW = Molare Masse der Säure
E = Einwaage Probe (g)
f = Faktor Titrant

Die Polykondensation wird mit oder ohne Lösungsmittel, bevorzugt in Abwesenheit von Lösemitteln durchgeführt.
Je nach Viskosität kann mittels geeigneter Lösemittel wie zum Beispiel n-Butylacetat, aromatischen oder nichtaromatischen Lösungsmitteln oder anderen Lösemitteln der Festkörpergehalt eingestellt werden. Bevorzugte Lösemittel sind insbesondere: Glykolether, wie Ethylenglykoldimethylether, Glykoletherester, Ester wie Butylglykolacetat, 3-Methoxy-n-butylacetat, Butylacetat, Ethoxypropylacetat, Ketone wie Methylethylketon, Methylisobutylketon, aromatische Kohlenwasserstoffe wie Xylol, Solvesso 100 und Shellsol A. Besonders geeignet ist Butylacetat.
Bevorzugt ist ein Festkörpergehalt von > 80 Gew.-% besonders bevorzugt > 85 Gew.-%, ganz besonders bevorzugt > 90 Gew.-%.

Die Molekulargewichte $M_n$ der erfindungsgemäßen Bindemittel liegen zwischen 700 bis 3000 g/mol, bevorzugt 800 bis 2000 g/mol.

Die erfindungsgemäßen Bindemittel können in einer weiteren bevorzugten Ausführungsform mit Di- oder Polyisocyanaten, Isocyanatsilanen und/oder Aminosilanen umgesetzt werden. Somit erfolgt eine Modifizierung der erfindungsgemäßen Bindemittel. Im Rahmen der vorliegenden Erfindung ist dabei auch eine mehrfache Umsetzung möglich, das heißt es können beispielsweise die erfindungsgemäßen Bindemittel zunächst mit Di- oder Polyisocyanaten und anschließend mit Aminosilanen umgesetzt werden. Vorzugsweise erfolgt die Modifizierung in der Weise, dass die erfindungsgemäßen Bindemittel im Endprodukt Alkoxysilyl-Gruppen aufweisen.

Geeignete Di- und/oder Polyisocyanate sind bevorzugt an sich bekannte substituierte oder unsubstituierte aromatische, aliphatische, cycloaliphatische und/oder heterocyclische Polyiscyanate. Beispiele für bevorzugte Di- und / oder Polyisocyanate sind 2,4-Toluoldiisocyanat, 2,6-Toluoldiisocyanat, Diphenylmethan-4,4'-diphenylendiisocyanat, Diphenylmethan-2,4'-diisocyanat, Hexamethylendiisocyanat, Isophorondiisocyanat (Vestanat® IPDI), Dicyclohexylmethyldiisocyanat (Vestanat® $H_{12}$MDI). Weiterhin bevorzugte Polyisocyanate sind die Biuret-Dimere und die Isocyanurat-Trimere der vorgenannten Diisocyanate.

Besonders bevorzugte Polyisocyanate sind Hexamethylen-1,6-diisocyant, Isophorondiisocyanat und Dicyclohexylmethyldiisocyanat, deren Biuret-Dimere und/oder Isocyanurat-Trimere.

Bevorzugte Aminosilane sind Bis(3-propyltrimethoxysilyl)amin, Bis(3-propyltriethoxysilyl)amin, Aminopropyltrimethoxysilan, Aminopropyltriethoxysilan, N-(n-butyl)-3-aminopropyltrimethoxysilan, 3-Aminopropylmethyldiethoxysilan. Entsprechende Aminosilane sind beispielsweise unter den Namen DYNASYLAN® der Firma Evonik Industries AG bzw. Silquest™ der Firma Momentive verfügbar.

Bevorzugte Isocyanatsilane sind 3-Isocyanatpropyltrimethoxysilan (Vestanat® EP-IPMS von Evonik Industries AG) oder 3-Isocyanatpropyltriethoxysilan. Bei bevorzugtem Einsatz solcher Isocyanatsilane kann direkt die Modifizierung zu einem silyltrialkoxyfunktionellem Silikon-Acrylat-Polyester erfolgen.

Vorzugsweise kann die Modifizierung eines erfindungsgemäßen OH-funktionellen Silikon-Acrylat-Hybrid Harzes zunächst mit einem Di- oder Polyisocyanat und anschließend mit einem Aminosilan erfolgen. Das erhaltene Bindemittel mit einer Silyltrialkoxy-Funktion kann vereinfacht mit der allgemeinen Formel 2 beschrieben werden:

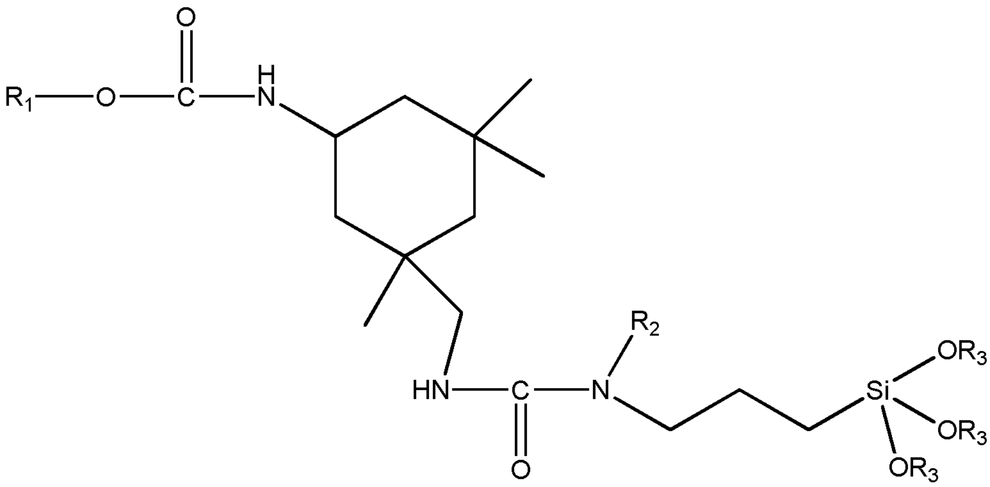

Formel 2

worin $R_1$ die Verknüpfung zum erfindungsgemäßen hydroxyfunktionellen Silikon-Hybrid Harz beschreibt, $R_2$ unabhängig voneinander Alkyl, Aryl oder Alkyl-Silyltrialkoxy sein kann und $R_3$ Alkylgruppen, bevorzugt Methyl- oder Ethyl- sind.

Bei Verwendung von Isocyanatsilanen, wie z. B. Vestanat® EP-IPMS von Evonik Industries AG, erfolgt die Modifizierung der erfindungsgemäßen Bindemittel gemäß der Formel 3,

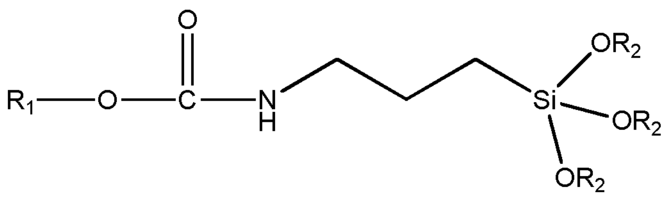

Formel 3

worin $R_1$ die Verknüpfung zum erfindungsgemäßen hydroxyfunktionellen Silikon-Hybrid Harz beschreibt und $R_2$ Alkylgruppen, bevorzugt Methyl- oder Ethyl- sind.

Ein weiterer Gegenstand der vorliegenden Erfindung ist die Verwendung der erfindungsgemäßen Bindemittel in Beschichtungen. Beschichtungen enthaltend die erfindungsgemäßen Bindemittel sind ebenfalls Gegenstand der vorliegenden Erfindung. Die erfindungsgemäßen OH-funktionellen Bindemittel werden insbesondere zur Herstellung von 1- oder 2-komponentigen Beschichtungen eingesetzt, insbesondere für Decklacke, Korrosionsschutzlacke, hier insbesondere im Schiffsbau oder für allgemeine Industrielacke wie zum Beispiel für Landmaschinen und Baumaschinen. Weitere geeignete Einsatzgebiete sind Schutzlacke für Offshore-Bohrinseln oder Brücken. Insbesondere eignen sich die erfindungsgemäßen Bindemittel für Ultrahigh-solid-Decklacke mit hoher Wetterstabilität sowie hoher Chemikalienbeständigkeit gegen Säuren, Basen, Kerosin, Benzin, Diesel oder Skydrol.

Im Falle von 2-komponentigen Beschichtungen werden beispielsweise Polyisocyanate eingesetzt. Die zur Vernetzung der erfindungsgemäßen Bindemittel verwendbaren Polyisocyanate sind lacktypische Polyisocyanate wie zum Beispiel die Desmodur® N-Typen der Firma Bayer AG oder die Vestanat® HT-Typen der Firma Evonik Industries

AG. Es können aliphatische oder cycloalipahatische und aromatische Polyisocyanate verwendet werden, wie beispielsweise Hexamethylendiisocyanate, Trimethylhexamethylendiisocyanat, Isophorondiisocyanat, 4,4'-Diisocyanatodicyclohexylmethan, Toluylen-2,4-diisocyanat, ortho-,-meta- und para-Xylylendiisocyanat,
4,4'Diisocyanatdiphenylmethan, aber auch verkappte Polyisocyanate, wie zum Beispiel mit CH-, NH- oder OH-aciden Verbindungen verkappte Polyisocyanate. Darüber hinaus eignen sich auch Biuret-, Allophanat-, Urethan- oder IsocyanuratGruppen enthaltende Polyisocyanate.

Der Anteil an Polyisocyanat-Vernetzer wird so gewählt, dass auf eine

Hydroxylgruppe des Silikon-Hybrid Bindemittels 0,5 bis 1,5 Isocyanat-Gruppen entfallen. Überschüssige Isocyanat-Gruppen können durch Feuchtigkeit abreagieren und zur Vernetzung beitragen.

Die Aushärtung solcher silylalkoxy-funktionellen Bindemittel erfolgt bei Anwesenheit von Luftfeuchtigkeit mit geeigneten Katalysatoren, in der Regel bei Raumtemperatur unter Hydrolyse und Kondensation der Silyltrialkoxygruppen.
Katalysatoren, die die Aushärtung von Alkoxysilylgruppen fördern sind dem Fachmann hinreichend bekannt. Nachfolgend seien exemplarisch genannt: Zinn-Verbindungen wie Zinndiacetat, Zinndioctoat, Dibutylzinndiacetylacetonat, Zinn Tetraacetat, Dibutylzinndiacetat, Dibutylzinndioctoat, Dibutylzinndilaurat, Dibutylzinndioleat, Dimethoxydibutylzinn, Dimetylzinn, Dibutylzinnbenzylmaleat, Bis (triethoxysiloxy)dibutylzinn, Diphenylzinndiacetat, Titanverbindungen, wie Tetraethoxy-titan, Tetra-n-propoxy-titan, Tetra-i-propoxy-titan, Tetra-n-butoxytitan, Tetra-i-butoxytitan, Tetrakis-(2-ethylhexoxy)titan, Di-i-propoxy-bis (ethylacetoacetat)titan, Dipropoxy-bis-(acetylacetonat)-titan, Di-i-propoxy-bis-(acetylacetonat)-titan, Dibutoxy-bis-(acetylacetonat)-titan, Tri-i-propoxyallyltitanacetat, Isopropoxyoctylenglycol- oder Bis(acetylacetonat)-titanoxid, Metallo-aliphatischen Verbindungen, wie Bleidiacetat, Blei-di-2-ethylhexanoat, Bleidineodecanoat, Bleitetraacetat, Bleitetrapropionat, Zinkacetylacetonat, Zink-2-ethylcaproat, Zink-diacetat, Bis-(2 -Ethylhexansäure)-Zink, Zink-Dineodecanoat, Zink-diundecenoat, Zinkdimethacrylat, Tetrakis-(2-Ethylhexansäure)-zirkoniumdichlorid, Tetrakis-(Methacrylsäure)-zirkoniumdichlorid, Kobalt-diacetat. Des Weiteren können auch Bismutkatalysatoren, z. B. der sogenannte Borchi-Katalysator, Eisen(II)- und Eisen(III)- Verbindungen, z. B. Eisen(III)-acetylacetonat oder Eisen-diacetat, Aluminiumverbindungen, z. B. Aluminiumacetylacetonat, Calcium-verbindungen, z. B. Calciumethylendiamintetraacetat, Magnesiumverbindungen, z. B. Magnesiumethylendiamin-tetraacetat als Katalysatoren eingesetzt werden.

Darüber hinaus eignen sich auch Aminstrukturen, z. B. Triethylamin, Tributylamin, Aminopropyltrimethoxysilan, N-(2-Aminoethyl)-3-aminopropyltrimethoxysilan, Tetramethylguanidin oder 1,8-Diazabicyclo [5.4.0.] -7-undecen, 1,4-Diazabicyclo[2, 2,2]octan, 1,8-Diazabicyclo[5.4.0]undec-7-en, 1,5-Diazabicyclo-[4.3.0]non-5-en, N,N-Bis-(N,N-dimethyl-2-aminoethyl)-methylamin, N,N-Dimethylcyclohexylamin, N,N-Dimethylphenylamin oder N-Ethylmorpholin. Ebenfalls katalytisch aktiv sind Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat. Auch organische oder anorganische Brönstedsäuren wie Methansulfonsäure, p-Toluolsulfonsäure, Dodecylbenzolsulfonsäure, 1-Naphthalinsulfonsäure, Camphersulfonsäure, Essigsäure, Trifluoressigsäure oder Benzoylchlorid, Salzsäure, Phoshorsäure, deren Mono- und/oder Diester, wie z. B. Butylphosphat, (Iso-) Propylphosphat, Dibutylphosphat etc., sind als Katalysatoren geeignet. Auch anorganische und organische Brönstedbasen wie z. B. Natriumhydroxid, Tetramethylammoniumhydroxid, Kaliumhydroxid, oder Tetrabutylammoniumhydroxid sind als Katalysatoren geeignet. Selbstverständlich können auch Kombinationen mehrerer Katalysatoren eingesetzt werden.

Auch sind sogenannte photolatente Basen als Vernetzungskatalysatoren bekannt, wie sie in der WO 2005/100482 beschrieben sind. Unter photolatenten Basen sind vorzugsweise organische Basen mit einem oder mehreren basischen Stickstoffatomen zu verstehen, die zunächst in einer blockierten Form vorliegen und erst nach Bestrahlung mit UV-Licht, sichtbarem Licht oder IR-Strahlung durch Spaltung des Moleküls die basische Form freisetzen.

Auch katalytisch aktiv sind Katalysatoren, welche von der Firma Du Pont unter der Handelsbezeichnung Tyzor® vertrieben werden. Gleiches gilt für Katalysatoren des Typs Kenreact® (Kenrich), Borchi Kat® (Borchers) bzw. K-Cure® / Nacure® (King Industries).

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

**Beispiele:**

Im Rahmen der vorliegenden Erfindung wurden neben den bereits vorab genannten Messmethoden folgende Methoden verwendet:

a) Viskosität, bestimmt mit Spindelviskosimeter Brookfield LV-DV-I+

Die Bestimmung der Viskositäten erfolgte mittels eines Spindelviskosimeter Typ Brookfield LV-DV-I+. Brookfield-Viskosimeter sind Rotationsviskosimeter mit definierten Spindelsätzen als Rotationskörper. Bei den verwendeten Rotationskörpern handelte es sich um einen LV-Spindelsatz. Aufgrund der Temperaturanhängigkeit der Viskosität wurde die Temperaturen von Viskosimeter und Messflüssigkeit während der Messung auf +/- 0,5 °C genau konstant gehalten. Weitere verwendete Materialien neben dem LV-Spindelsatz waren ein thermostatisierbares Wasserbad, ein Thermometer 0 - 100°C (Skalenteile 1 °C bzw. kleiner) und ein Zeitmessgerät (Skalenwerte nicht größer als 0,1 Sekunden). Zur Messung wurden 100 ml der Probe in eine Weithalsflasche gefüllt; temperiert und luftblasenfrei vermessen, nachdem eine vorherige Kalibrierung erfolgt war. Zur Bestimmung der Viskosität wurde das Viskosimeter so zur Probe positioniert, dass die Spindel bis zur Markierung im Produkt eintaucht. Die Messung wird mit Hilfe der Starttaste ausgelöst, wobei darauf geachtet wurde, dass die Messung im günstigen Messbereich von 50 % (+/- 20 %) des maximal messbaren Drehmoments erfolgte. Das Ergebnis der Messung wurde am Display des Viskosimeters in mPas ausgegeben, wobei die Division durch die Dichte (g/ml) die Viskosität in $mm^2/s$ liefert.

b) Bestimmung des Gehaltes an nichtflüchtigen Anteilen (Festkörperbestimmung)

Die Bestimmung des Gehaltes an nichtflüchtigen Anteilen erfolgt gemäß DIN EN ISO 3251:2008, wobei im Rahmen der vorliegenden Erfindung für die Bestimmung des Festkörpers die Prüfung für 60 Minuten bei 125 °C durchgeführt wird.

c) Trockenzeitmessungen

Zur Beurteilung der katalytischen Aktivität von Katalysatoren in einem Bindemittel eignet sich die Bestimmung der Trockenzeit mit einem Trockenzeitmessgerät (Drying Recorder). Ein solches Prüfverfahren beschreibt die ASTM D5895. Analog dieser Prüfmethode wurden Trockenzeitmessungen mittels eines Drying Recorders Typ BK3 (The Mickle Laboratory Engineering Co. Ltd., Goose Green, Gomshall, Guildford, Surrey GU5 9LJ., U.K.) durchgeführt. Dabei wurden auf Standardglasstreifen (30 x 2,5 cm x 2 mm) mittels einer Kastenrakel (Erichsen Model 360) dünne Bindemittelfilme aufgetragen. Die Standardglasstreifen wurden zuvor mit Aceton und nachfolgend einer Ethanol / VE-Wasser-Mischung von Staub, Schmutz- und Fettanhaftungen befreit. Es wurde sodann der Schieber mittels eines Hebels auf der Rückseite, nach links in Startposition verschoben. Dann wurden die Ritznägel auf die Probenglasplatten runtergeklappt. Die Prüfdauer wurde auf 6, 12 bzw. 24 Stunden eingestellt und die Messung gestartet. Nach Ablauf der Prüfdauer wurden die Ritznägel hochgeklappt und die Glasplatten zur Beurteilung herausgenommen. Die An- und Durchtrocknungszeitpunkte wurden anhand der angebrachten Zeitskala abgelesen.

d) Pendelhärte nach König

Bei der Pendelhärte Bestimmung nach König (DIN 53157 oder EN ISO 1522) dient die Dämpfung eines schwingenden Pendels als Maß. Das Pendel mit zwei Edelstahlkugeln wird auf einen Lackfilm gesetzt. Es besteht eine physikalische Beziehung zwischen Dauer der Pendelschwingung, Amplitude und den geometrischen Abmessungen des Pendels. Das viskoelastische Verhalten der Beschichtung ist ausschlaggebend für die Härte. Wird das Pendel in Schwingung versetzt, rollen die Kugeln auf der Oberfläche und üben somit Druck auf sie aus. Die mehr oder weniger starke Rückfederung hängt von der Elastizität ab. Das Fehlen elastischer Kräfte verursacht eine starke Dämpfung der Pendelbewegung. Hohe elastische Kräfte dagegen verursachen nur eine geringe Dämpfung.
Pendelhärte nach "König": Schwingungsanzahl in osc.
1 Oszillation = 1,4 Sekunden

e) Glanzmessung und Glanzhaltung

Das Prinzip der Glanzmessung beruht auf der Messung der gerichteten Reflexion nach DIN EN ISO 2813. Dazu wird die Intensität des reflektierten Lichts in einem schmalen Bereich des Reflektionswinkels gemessen. Die Intensität des reflektierten Lichtes hängt vom Material und dem Einstrahlwinkel ab. Bei Lacken wird mit zunehmender Einstrahlung mehr Licht reflektiert. Der Rest des eingestrahlten Lichtes dringt ins Material ein und wird dort, je nach Farbton, zum Teil absorbiert oder diffus gestreut. Die Messergebnisse des Glanzmessers werden nicht auf die eingestrahlte Lichtmenge bezogen, sondern auf einen schwarzen, polierten Glasstandard mit definiertem Brechungsindex. Für diesen Standard wird der Messwert = 100 Glanzeinheiten gesetzt (Kalibrierung).

Die Glanzhaltung in % einer Lackoberfläche errechnet sich mit folgender Formel:

$$\text{Glanzhaltung in } \% = \frac{B*100}{A}$$

B = Glanzgrad nach UV-Belastung
A = Glanzgrad vor UV-Belastung
f) Farbabstand ΔE

Delta E, oft als dE oder ΔE geschrieben, ist ein Maß für den empfundenen Farbabstand, das möglichst für alle auftretenden Farben "gleichabständig" ist. Das Delta steht hierbei als Zeichen der Differenz. Damit können Arbeiten, die sich mit Farben befassen, quantifiziert werden.

Der Farbabstand wird normalerweise als Delta E angegeben. In DIN 5033 Teil 2 wird der Begriff Farbabstand gegenüber dem Begriff Farbdifferenz bevorzugt. Gegenüber Farbunterschied steht er für die quantifizierte Form. Jeder real auftretenden Farbe, auch jeder von einem Geräte abgegebenen oder gemessenen Farbe, lässt sich in einem dreidimensionalen Raum ein Farbort zuordnen. Diese Möglichkeit ist im Graßmannschen Gesetz begründet.

Der Wert von Delta E zwischen den Farborten $(L^*, a^*, b^*)_p$ und $(L^*, a^*, b^*)_v$ wird nach ISO 12647 und ISO 13655 als euklidischer Abstand berechnet:

$$\Delta E_{p,v} = \sqrt{(L_p^* - L_v^*)^2 + (a_p^* - a_v^*)^2 + (b_p^* - b_v^*)^2}$$

Bewertung von ΔE

Für Farbdifferenzen ΔE als euklidischer Abstand der L*a*b*-Werte (oder aus den Polarkoordinaten L*C*h*) wird üblicherweise die in der folgenden Tabelle benannte Beurteilung angegeben.

| ΔE | Bewertung |
|---|---|
| 0,0 ... 0,5 | kein bis fast kein Unterschied |
| 0,5 ... 1,0 | Unterschied kann für das geübte Auge bemerkbar sein |
| 1,0 ... 2,0 | merklicher Farbunterschied |
| 2,0 ... 4,0 | wahrgenommener Farbunterschied |
| 4,0 ... 5,0 | wesentlicher Farbunterschied, der selten toleriert wird |
| oberhalb 5,0 | die Differenz wird als andere Farbe bewertet |

Im CMC-System wird der Wert ΔE = 1, als "noch tolerierbare Farbabweichung" notiert. Da Farbräume trotz der erreichten Verbesserungen nur in der nahen Umgebung des Farbortes empfindungsgemäß sind, ist ein ΔE = 10 und höher bevorzugt als andere Farbe zu sehen.

g) QuV-A Prüfung

Die Beurteilung der Wetterbeständigkeit von Beschichtungen wird mittels eines QUV Schnellbewitterungsgerätes simuliert. Mit einer UVA-340-Lampe bietet das QUV die realistischste Simulation von Sonnenlicht im kurzwelligen Anteil des Spektrums [Sonnenlicht im kritischen Kurzwellenbereich zwischen 365 nm und dem unteren Grenzwert für Sonnenlicht (295 nm)]. Das QUV liefert exzellente, relative Vorhersagen über Schäden, die Materialien im Freien erleiden. Die Prüfung wird nach der ASTM G 154 Norm als Zyklen-Test durchgeführt. Ein Zyklus beinhaltet:

a) UV-Bestrahlung von 8 Stunden mit einer Strahlungsintensität von 0,89 $W/m^2$ bei einer Temperatur von 60 °C
b) Ein Kondensationsintervall von 4 Stunden ohne UV-bestrahlung bei 50 °C Die hergestellten Lackoberflächen mit den aus den Beispielen hergestellten Bindemitteln wurden dann insgesamt 1000 Stunden belastet.

Beispiel 1 (Erfindungsgemäß)

In einem Reaktionskessel werden 446 g DC 3074 (methoxyfunktionelles Methyl-/Phenylsilikonharz der Firma Dow Corning), 149 g Neopentylglykol, 64 g Trimethylolpropan, 119 g Methylhexahydrophthalsäureanhydrid, 52,5 g Cyclohexyldimethanol, 82 g Isononansäure und 663 g Syntalat™ A-TS 3737 (Hydroxygruppen-funktionelles Acrylatharz

der Firma Synthopol Chemie) eingefüllt und auf 180 °C unter Stickstoffzufuhr mit einem aufgesetzten Kolonnenaufsatz zur Abscheidung des während der Reaktion entstehenden Alkohols und Wassers erhitzt. Die Temperatur wird kontinuierlich bis 230 °C erhöht.
Nach etwa 8 bis 13 Stunden wird die Polykondensation nach Erreichen von Säurezahlen < 5 mg KOH/g beendet. Hierbei beträgt der Umsatz etwa 96 %.
Das erhaltene Silikon-Acrylat-Polyester-Hybrid-Harz wird mittels n-Butylacetat auf einen Festkörpergehalt von 90 Gew.-% eingestellt. Es wurden folgende Kennzahlen erhalten:

| | |
|---|---|
| Feststoffgehalt: | 90 Gew.-% (1h bei 125 °C) |
| Viskosität: | 9000 mPa*s |
| Säurezahl: | 2,3 mg KOH/g |
| Hydroxylzahl: | 184 mgKOH/g |

**Beispiel 2 (Erfindungsgemäß)**

In einem Reaktionskessel werden 98 g Silres™ SY 231 (methoxyfunktionelles Methyl-/Phenylsilikonharz der Firma Wacker), 121 g Joncryl™ SCX 507 (Hydroxygruppen-funktionelles Acrylatharz der Firma BASF), 66 g TegoSoft G20 (2-Octyldodecan-1-ol), 27 g Trimethylolpropan, 18 g Neopentylglykol und 42,5 g Methylhexahydrophthalsäureanhydrid eingefüllt und auf 180 °C unter Stickstoffzufuhr mit einem aufgesetzten Kolonnenaufsatz zur Abscheidung des während der Reaktion entstehenden Alkohols und Wassers erhitzt. Die Temperatur wird kontinuierlich bis 230 °C erhöht.
Nach etwa 8 bis 13 Stunden wird die Polykondensation nach Erreichen von Säurezahlen < 5 mg KOH/g beendet. Hierbei beträgt der Umsatz etwa 96 %.
Das erhaltene Silikon-Acrylat-Polyester-Hybrid-Harz wird mittels n-Butylacetat auf einen Festkörpergehalt von 80 Gew.-% eingestellt. Es wurden folgende Kennzahlen erhalten:

| | |
|---|---|
| Feststoffgehalt: | 80 Gew.-% (1h bei 125 °C) |
| Viskosität: | 350 mPa*s |
| Säurezahl: | 2,3 mg KOH/g |
| Hydroxylzahl: | 110 mg KOH/g |

**Beispiel 3 (Erfindungsgemäß)**

In einem Reaktionskessel werden 755 g DC 3074 (methoxyfunktionelles Methyl-/Phenylsilikonharz der Firma Dow Corning), 300,5 g Neopentylglykol, 119,4 g Monoethylenglykol, 300,5 g Methylhexahydrophthalsäureanhydrid, und 1877 g Joncryl™ 507 (Hydroxygruppen-funktionelles Acrylatharz der Firma BASF SE) eingefüllt und auf 180 °C unter Stickstoffzufuhr mit einem aufgesetzten Kolonnenaufsatz zur Abscheidung des während der Reaktion entstehenden Alkohols und Wassers erhitzt. Die Temperatur wird kontinuierlich bis 210 °C erhöht.
Nach etwa 8 bis 13 Stunden wird die Polykondensation nach Erreichen von Säurezahlen < 5 mg KOH/g beendet. Hierbei beträgt der Umsatz etwa 96 %.
Das erhaltene Silikon-Acrylat-Polyester-Hybrid-Harz wird mittels n-Butylacetat auf einen Festkörpergehalt von 80 Gew.-% eingestellt. Es wurden folgende Kennzahlen erhalten:

| | |
|---|---|
| Feststoffgehalt: | 80 Gew.-% (1h bei 125 °C) |
| Viskosität: | 1100 mPa*s |
| Säurezahl: | 3,5 mg KOH/g |
| Hydroxylzahl: | 152 mg KOH/g |

**Beispiel 4 (Erfindungsgemäß)**

In einem Reaktionskessel mit Rückflusskühler und Tropftrichter werden 150 g des aus Beispiel 2 hergestellten hydroxyfunktionellen Silikon-Hybrid-Harzes vorgelegt. Bei Raumtemperatur werden unter Stickstoffzufuhr 43 g Vestanat® IPDI (Isophorondiisocyanat der Firma Evonik Industries AG) zugetropft, auf 50 °C erwärmt und ca. 2 Stunden bei der Temperatur gehalten bis der theoretische NCO-Wert von 4,6 % (auf Festharz) erreicht ist. Es wird auf Raumtemperatur abgekühlt und in einem separaten Tropftrichter werden 59 g N-(3-Trimethoxysilylpropan-1 yl-)-N-n-butylamin (Dynasylan® 1189 der Firma Evonik Industries AG) zugetropft, so dass die Temperatur von 40 °C nicht überschritten wird.

Nach beendigter Zugabe wird das erhaltene Bindemittel mit einem Lösemittelgemisch aus 2 Teilen n-Butylacetat und 1 Teil Isobutanol auf einen Festkörper von 70 Gew.-% eingestellt.

Viskosität: 500 mPa*s

**Beispiel 5 (Erfindungsgemäß)**

In einem Reaktionskessel werden 207,5 g DC 3074 (methoxyfunktionelles Methyl-/Phenylsilikonharz der Firma Dow Corning), 692 g Synocure™ 9293 (Hydroxygruppen-funktionelles Acrylatharz der Firma Arkema) und 99 g 1-Octanol eingefüllt und auf 100 °C unter Stickstoffzufuhr mit einem aufgesetzten Kolonnenaufsatz zur Abscheidung des während der Reaktion entstehenden Alkohols erhitzt.

Nach etwa 6 bis 8 Stunden wird die Polykondensation nach Erreichen der theoretischen Destillatmenge beendet.

Das erhaltene Silikon-Acrylat-Hybrid-Harz wird mittels n-Butylacetat auf einen Festkörpergehalt von 78 Gew.-% eingestellt. Es wurden folgende Kennzahlen erhalten:

| | |
|---|---|
| Feststoffgehalt: | 78 Gew.-% (1h bei 125 °C) |
| Viskosität: | 2430 mPa*s |
| Säurezahl: | 4,2 mg KOH/g |
| Hydroxylzahl: | 60 mg KOH/g |

In einem weiteren Reaktionskessel werden 222 g Vestanat® HT 2500 LV (HDI-Isocyanurat der Evonik Industries AG) vorgelegt. Unter Rühren werden 278 g Bis(trimethoxysilylpropyl)amin (Dynasylan® 1124 der Evonik Industries AG) so zu dosiert, dass die Temperatur 40 °C nicht überschreitet. Es wurden folgende Kennzahlen erhalten:

| | |
|---|---|
| Feststoffgehalt: | 99 Gew.-% (1h bei 125 °C) |
| Viskosität: | 66.000 mPa*s |
| NCO-Zahl: | 3,4 Gew.-% |

In einem Reaktionskessel werden 200 g des 78%igen hydroxyfunktionellen Silikon-Acrylat-Hybrid-Harzes vorgelegt und mit 74 g n-Butylacetat verdünnt. Unter Rühren werden 196 g des silylalkoxyfunktionellen Isocyanat-Prepolymer zugegeben und bei 40 °C etwa 4 bis 5 Stunden reagieren lassen bis der NCO-Wert Null ist. Es wurden folgende Kennzahlen erhalten:

| | |
|---|---|
| Festkörpergehalt: | 75 Gew.-% (1h bei 125 °C) |
| Viskosität: | 4100 mPa*s |

**Beispiel 6 (Erfindungsgemäß)**

In einem Reaktionskessel mit Rückflusskühler und Tropftrichter werden 100 g des aus Beispiel 3 hergestellten hydroxyfunktionellen Silikon-Hybrid-Harzes vorgelegt. Bei Raumtemperatur werden unter Stickstoffzufuhr 55,4 g Vestanat® $H_{12}$MDI (Dicyclohexylmethyldiisocyanat der Firma Evonik Industries AG) zugetropft, auf 50 °C erwärmt und ca. 2 Stunden bei der Temperatur gehalten bis der theoretische NCO-Wert von 5,7 % (auf Festharz) erreicht ist. Es wird auf Raumtemperatur abgekühlt und in einem separaten Tropftrichter werden eine Mischung aus 48 g Bis(triethoxysilylpropyl)amin (Dynasylan® 1122 der Firma Evonik Industries AG), 24,7 g Diisononylamin und 0,8 g Isobutanol zugetropft, so dass die Temperatur von 40 °C nicht überschritten wird.

Nach beendigter Zugabe wird das erhaltene Bindemittel mit n-Butylacetat auf einen Festkörper von 70 Gew.-% eingestellt.

Viskosität: 4090 mPa*s

**Beispiel 7 (Erfindungsgemäß)**

In einem Reaktionskessel mit Rückflusskühler und Tropftrichter werden 100 g des aus Beispiel 3 hergestellten hydroxyfunktionellen Silikon-Hybrid-Harzes sowie 80 g Dynasylan® MTES (Methyltriethoxysilan der Firma Evonik Industries AG) vorgelegt. Bei Raumtemperatur werden unter Stickstoffzufuhr 55,5 g Vestanat® $H_{12}$MDI (Dicyclohexylmethyldiisocyanat der Firma Evonik Industries AG) zugetropft, auf 50 °C erwärmt und ca. 2 Stunden bei der Temperatur gehalten bis der theoretische NCO-Wert von 4,1 % (auf Festharz) erreicht ist. Es wird auf Raumtemperatur abgekühlt

und in einem separaten Tropftrichter werden eine Mischung aus 49,4 g Bis(triethoxysilylpropyl)amin (Dynasylan® 1122 der Firma Evonik Industries AG), 26,4 g Diisononylamin und 0,9 g Isobutanol zugetropft, so dass die Temperatur von 40 °C nicht überschritten wird.

Nach beendigter Zugabe wird das erhaltene Bindemittel mit n-Butylacetat auf einen Festkörper von 90 Gew.-% eingestellt.

Viskosität: 2500 mPa*s

**Herstellung eines 2K Polyurethan-Decklackes**

Aus dem entsprechenden Bindemitteln aus den Beispielen 1 wird wie nachstehend ein weißpigmentierter Decklack (Tabelle 1) sowie ein Klarlack (Tabelle 2) hergestellt. Als Vergleich dient Synthalat™ A-HD 6387, ein siloxanhaltiges High-Solid-Acrylatharz, der Fa. Synthopol, welches eine Viskosität von 12000 bis 18000 mPa*s bei einem Festkörper von 75 % aufweist.

Tabelle 1

| | Vergleich | Weißlack 1 |
|---|---|---|
| Vergleich Bindemittel (75 %) | 56,0 | |
| Bindemittel Beispiel 1 (90 %) | | 50,0 |
| Tego® Airex 900[1] | 0,3 | 0,3 |
| Tego® Dispers 670[2] | 1,0 | 1,0 |
| Butylacetat | | 3,6 |
| Butylglykolacetat | 1,5 | 1,5 |
| Isobutanol | | |
| Thixatrol ST[3] | 0,3 | 0,3 |
| Kronos 2315[4] | 33,0 | 35,0 |
| Blanc fixe micro[5] | 7,7 | 8,0 |
| Tib Kat 218[6] (10 % in BuAc) | 0,2 | 0,3 |
| **Gesamtgewicht** | **100** | **100** |
| Festkörper Lack | 83% | 89% |

[1] Tego Airex 900 ist ein Entlüfter der Fa. Evonik Industries AG
[2] Tego Dispers 670 ist ein Dispergieradditiv der Fa. Evonik Industries AG
[3] Thixatrol ST ist ein Rheologieadditiv der Fa. Elementis
[4] Kronos 2315 ist ein Titandioxid der Fa. Kronos
[5] Blanc fixe micro ist ein mikronisiertes Bariumsulfat der Fa. Sachtleben
[6] Tib Kat 218 ist ein Katalysator der Fa. Tib Chemicals

Tabelle 2 Vergleich Klarlack 1 Vergleich Bindemittel (75 %) 95,0 Bindemittel Beispiel 1 (90 %) 95,0 Bindemittel Beispiel 3 (70 %) Butylacetat 5,0 5,0 **Gesamtgewicht 100 100** Isocyanathärter Vestanat® HT 2500 LV Mischung: Vestanat® HT 2500 LV 80,0 Butylacetat 20,0 Gesamtgewicht 100 Der Weißlack aus Tabelle 1 wurde mit der Isocyanathärter-Mischung wie folgt abgehärtet, wobei der Anteil des Härters stöchiometrisch berechnet wird, also aus dem Verhältnis von NCO-Gruppen zu OH-Gruppen aus dem Harz:

Vergleich: 100 : 24
Weißlack 1: 100 : 34

Der Klarlack aus Tabelle 2 wurde mit der Isocyanathärter-Mischung wie folgt abgehärtet:

Vergleich: 100 : 43

(fortgesetzt)

Klarlack 1: 100 : 69

Zur Prüfung der lacktechnischen Eigenschaften wurde der Klarlack 1 sowie der Vergleich mittels der Isocyanathärtermischung in den angegebenen Verhältnissen gehärtet. Die Klarlacke wurden mit nahezu gleicher Trockenschichtdicke von ca. 50 μm aufgezogen und 7 Tage bei Raumtemperatur (ca. 20 bis 25 °C) getrocknet.

Anschließend wurden Pendelhärten nach König, Trockenzeiten mittels drying recorder, MEK double rubs und die UV-Stabilität nach 1000 Stunden UV-A Belastung bewertet. In Tabelle 3 sind die Prüfergebnisse zusammengefasst.

Tabelle 3: Klarlackergebnisse

| | Vergleich | Klarlack 1 |
|---|---|---|
| Schichtdicke μm | 45 | 50 |
| Antrocknung in Stunden | 1,5 | 1,5 |
| Durchtrocknung in Stunden | 6 | 5 |
| Pendelhärte nach König in sec<br>nach 1 Tag<br>nach 7 Tagen | <br>21<br>74 | <br>30<br>97 |
| MEK double rubs nach 7 Tagen | 77 | 190 |
| 1000 Stunden QUV-A Belastung<br>Glanzhaltung in % 20°-Winkel<br>ΔE | <br>97<br>4,3 | <br>100<br>2,7 |

Von den Weißlacken aus Tabelle 1 wurde die Chemikalienbeständigkeit geprüft. Die Lacke des Vergleichsbindemittels und der Weißlack 1 wurden in den angegebenen Verhältnissen mit der Isocyanathärtermischung gehärtet. Die Weißlacke wurden mit nahezu gleicher Trockenschichtdicke von ca. 50 μm aufgezogen und 7 Tage bei Raumtemperatur (ca. 20 bis 25 °C) getrocknet. Anschließend wurden die Beschichtungen 8 Stunden mit einen getränktem Wattebausch aus der in Tabelle 4 aufgelisteten Chemikalien bei Raumtemperatur (20 bis 25 °C) belastet.

Tabelle 4 Chemikalienbeständigkeit Weißlacke

| | Vergleich | Beispiel 1 |
|---|---|---|
| Essigsäure (10 %) | 1 | 1 |
| Salzsäure (10 %) | 1 | 1 |
| Schwefelsäure (50 %) | 1 | 3 |
| Natronlauge (20 %) | 1 | 1 |
| Hydrauliköl | 1 | 1 |
| Isopropanol | 2 | 2 |
| Ranking / Bewertung:1 = keine Veränderung der Lackoberfläche<br>2 = leichter Angriff der Lackoberfläche<br>3 = starker Angriff der Lackoberfläche | | |

**Herstellung eines feuchtigkeitshärtenden Decklackes**

Von den entsprechenden Bindemitteln aus den Beispielen 4 bis 7 wurde wie nachstehend ein weißpigmentierter Decklack (Tabelle 5) sowie ein Klarlack (Tabelle 6) hergestellt.

Tabelle 5

| | Weißlack 1 | Weißlack 2 | Weißlack 3 | Weißlack 4 |
|---|---|---|---|---|
| Bindemittel Beispiel 4 (70 %) | 60 | | | |

(fortgesetzt)

| | Weißlack 1 | Weißlack 2 | Weißlack 3 | Weißlack 4 |
|---|---|---|---|---|
| Bindemittel Beispiel 5 (75 %) | | 56 | | |
| Bindemittel Beispiel 6 (70 %) | | | 60 | |
| Bindemittel Beispiel 7 (90 %) | | | | 47 |
| Tego® Airex 900[1] | 0,3 | | | |
| Tego® Dispers 670[2] | 0,9 | | | |
| Butylacetat | | 4,0 | | 13,0 |
| Isobutanol | 1,1 | | | |
| Thixatrol ST[3] | 0,3 | | | |
| Kronos 2315[4] | 30,0 | | | |
| Blanc fixe micro[5] | 7,0 | | | |
| DBU[6] | 0,4 | | | |
| **Gesamtgewicht** | **100** | | | |
| Festkörper Lack | 80,0 % | | | |

[1] Tego Airex 900 ist ein Entlüfter der Fa. Evonik Industries AG
[2] Tego Dispers 670 ist ein Dispergieradditiv der Fa. Evonik Industries AG
[3] Thixatrol ST ist ein Rheologieadditiv der Fa. Elementis
[4] Kronos 2315 ist ein Titandioxid der Fa. Kronos
[5] Blanc fixe micro ist ein mikronisiertes Bariumsulfat der Fa. Sachtleben
[6] DBU (1,8-Diazabicyclo[5.4.0]undec-7-en) ist ein Katalysator

Tabelle 6

| | Klarlack 1 | Klarlack 2 | Klarlack 3 | Klarlack 4 |
|---|---|---|---|---|
| Bindemittel Beispiel 4 (70 %) | 100 | | | |
| Bindemittel Beispiel 5 (75 %) | | 100 | | |
| Bindemittel Beispiel 6 (70 %) | | | 100 | |
| Bindemittel Beispiel 7 (90 %) | | | | 100 |
| **Gesamtgewicht** | **100** | **100** | **100** | **100** |

Die Klarlacke wurden mit DBU als Katalysator (1% Katalysator bezogen auf Festharz) über Hydrolyse- / Kondensationsreaktion der Silyltrialkoxygruppen ausgehärtet. Die Klarlacke wurden mit nahezu gleicher Trockenschichtdicke von ca. 50 $\mu$m aufgezogen und 7 Tage bei Raumtemperatur (ca. 20 bis 25 °C) getrocknet. Anschließend wurden Pendelhärten nach König, Trockenzeiten mittels drying recorder, MEK double rubs und die UV-Stabilität nach 1000 Stunden UV-A Belastung bewertet. In Tabelle 7 sind die Prüfergebnisse zusammengefasst.

Tabelle 7: Klarlackergebnisse

| | Klarlack 1 | Klarlack 2 | Klarlack 3 | Klarlack 4 |
|---|---|---|---|---|
| Schichtdicke $\mu$m | 47 | 45 | 50 | 48 |
| Antrocknung in Stunden | 3 | 5 | 0,4 | 0,6 |
| Durchtrocknung in Stunden | 12 | 10 | 10 | 2,5 |
| Pendelhärte nach König in sec<br>nach 1 Tag<br>nach 7 Tagen | <br>15<br>70 | <br>20<br>90 | <br>56<br>80 | <br>61<br>83 |

(fortgesetzt)

| | Klarlack 1 | Klarlack 2 | Klarlack 3 | Klarlack 4 |
|---|---|---|---|---|
| MEK double rubs nach 7 Tagen | 100 | 50 | 19 | 15 |
| 1000 Stunden QUV-A Belastung<br>Glanzhaltung in % 20°-Winkel<br>ΔE | <br>100<br>1,0 | <br>98<br>1,5 | <br>100<br>1,0 | <br>99<br>1,3 |

Von den Weißlacken aus Tabelle 5 wurde die Chemikalienbeständigkeit geprüft. Die Weißlacke wurden mit nahezu gleicher Trockenschichtdicke von ca. 50 μm aufgezogen und 7 Tage bei Raumtemperatur (ca. 20 bis 25 °C) getrocknet. Anschließend wurden die Beschichtungen 8 Stunden mit einen getränktem Wattebausch aus der in Tabelle 8 aufgelisteten Chemikalien bei Raumtemperatur (20 bis 25 °C) belastet.

Tabelle 8 Chemikalienbeständigkeit Weißlacke

| | Weißlack 1 | Weißlack 2 | Weißlack 3 | Weißlack 4 |
|---|---|---|---|---|
| Essigsäure (10 %) | 1 | 1 | 1 | 1 |
| Salzsäure (10 %) | 1 | 1 | 1 | 1 |
| Schwefelsäure (50 %) | 1 | 2 | 1 | 1 |
| Natronlauge (20 %) | 2 | 3 | 3 | 3 |
| Hydrauliköl | 2 | 1 | 1 | 1 |
| Isopropanol | 3 | 3 | 3 | 3 |
| Ranking / Bewertung:1 = keine Veränderung der Lackoberfläche<br>2 = leichter Angriff der Lackoberfläche<br>3 = starker Angriff der Lackoberfläche | | | | |

**Patentansprüche**

1. Bindemittel auf Basis eines Hydroxygruppen-funktionellen Acrylatharzes A), eines Alkoxy- und/oder Silanol-funktionellen Polysiloxans B), einer oder mehrerer Di- oder Polycarbonsäuren C) und einem oder mehreren Di- oder Polyolen D), wobei die Bestandteile A) bis D) im Bindemittel miteinander kondensiert vorliegen, wobei sich das Bindemittel zusammensetzt aus 10 bis 50 Gew.-% Komponente B) und 50 - 90 Gew.-% einer Kombination aus Komponente A) und der Polyesterkomponente aus C) und D), bezogen auf den Festkörpergehalt der Bindemittel.

2. Bindemittel gemäß Anspruch 1, **dadurch gekennzeichnet, dass** die Hydroxygruppen-funktionellen Acrylatharze A) enthalten bzw. hergestellt sind aus: 35 bis 50 Gew.-% aromatischen Vinylverbindungen,

   10 bis 25 Gew.-% einen oder mehrere Hydroxyalkylester der (Meth)acrylsäure,
   5 bis 20 Gew.-% einen oder mehrere Alkylesters der (Meth)acrylsäure,
   3 bis 10 Gew.-% Acrylsäure und/oder Methacrylsäure und
   12 bis 30 Gew.-% eines Glycidylester einer gesättigten aliphatischen Monocarbonsäure mit 9 - 12 C-Atomen, die am alpha -Kohlenstoffatom verzweigt ist, jeweils bezogen auf das Gesamtgewicht der Komponente A).

3. Bindemittel gemäß Anspruch 1 oder 2, **dadurch gekennzeichnet, dass** die Molmassen Mn der Komponente A) im Bereich von 900 bis 4000 g/mol liegen.

4. Bindemittel gemäß einem oder mehreren der Ansprüche 1 bis 3, **dadurch gekennzeichnet, dass** es sich bei Komponente B) um nichtlineare, verzweigte, alkoxy-funktionelle und/oder Silanol-funktionelle Polysiloxane der allgemeinen Formel 1 handelt,

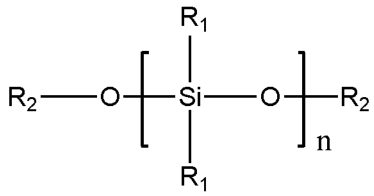

Formel 1

worin $R_1$ unabhängig voneinander Alkyl-, Aryl- oder Alkoxygruppen, Hydroxy- oder - $OSi(R_3)_3$-Gruppen sind, wobei $R_3$ unabhängig voneinander Alkyl-, Aryl-, Alkoxygruppen, Hydroxy oder -$OSi(R_3)_3$-Gruppen sein können, und wobei $R_2$ unabhängig voneinander Wasserstoff, Alkylgruppen oder Arylgruppen sein können und n > 1 ist.

**5.** Bindemittel gemäß einem oder mehreren der Ansprüche 1 bis 4, **dadurch gekennzeichnet, dass** als Komponente C) aromatische, aliphatische oder cycloaliphatische Di- oder Polycarbonsäuren und ihre Derivate eingesetzt werden.

**6.** Bindemittel gemäß einem oder mehreren der Ansprüche 1 bis 5, **dadurch gekennzeichnet, dass** als Di- oder Polyole D) Ethylenglykol, Propandiole, Butandiol-1,4; Hexandiol-1,6; Neopentylglykol, Trimethylolpropan; Pentaerythritol; Di-Trimethylolpropan, Perhydrobisphenol A; Dimethylolcyclohexan und 3(4), 8(9)-Dihydroxymethyl-tricyclo[5.2.1.02.6]decan (TCD-Alkohol-DM) eingesetzt werden.

**7.** Bindemittel gemäß einem oder mehreren Ansprüche 1 bis 6, **dadurch gekennzeichnet, dass** das Gewichtsverhältnis von Komponente A) zu dem Polyesterbestandteil aus den Komponenten C) und D) 1 : 9 bis 9 : 1 beträgt.

**8.** Verfahren zur Herstellung von Bindemitteln gemäß Anspruch 1, wobei ein Hydroxygruppen-funktionellen Acrylatharz A), ein Alkoxy- und/oder Silanolfunktionelles Polysiloxan B), eine oder mehrere Di- oder Polycarbonsäuren C) und einen oder mehrere Di- oder Polyolen D) über eine Polykondensation miteinander zur Umsetzung gebracht werden.

**9.** Verfahren gemäß Anspruch 8, **dadurch gekennzeichnet, dass** bei der Polykondensationsreaktion der Komponenten A) bis D) ein Veresterungskatalysator eingesetzt wird.

**10.** Verfahren gemäß Anspruch 8 oder 9, **dadurch gekennzeichnet, dass** die Bindemittel mit Di- oder Polyisocyanaten, Isocyanatsilanen und/oder Aminosilanen umgesetzt werden.

**11.** Verwendung der Bindemittel gemäß einem oder mehreren der Ansprüche 1 bis 7 in Beschichtungen.

**12.** Beschichtungen enthaltend Bindemittel gemäß einem oder mehreren der Ansprüche 1 bis 7.

**13.** Beschichtungen gemäß Anspruch 12, **dadurch gekennzeichnet, dass** es sich um 1-oder 2-komponentige Beschichtungen handelt.

## Claims

**1.** Binder based on a hydroxy-functional acrylate resin A), an alkoxy- and/or silanol-functional polysiloxane B), one or more dicarboxylic or polycarboxylic acids C) and one or more diols or polyols D), the constituents A) to D) being present condensed with one another in the binder, the binder of the invention being composed of 10 to 50 wt% of component B) and 50-90 wt% of a combination of component A) and the polyester component comprising C) and D), based on the solids content of the binders.

**2.** Binder according to Claim 1, **characterized in that** the hydroxy-functional acrylate resins A) comprise or have been prepared from:

35 to 50 wt% of aromatic vinyl compounds,
10 to 25 wt% of one or more hydroxyalkyl esters of (meth)acrylic acid,
5 to 20 wt% of one or more alkyl esters of (meth)acrylic acid,
3 to 10 wt% of acrylic acid and/or methacrylic acid, and
12 to 30 wt% of a glycidyl ester of a saturated aliphatic monocarboxylic acid having 9-12 C atoms which is

branched on the alpha carbon atom, based in each case on the total weight of component A).

3. Binder according to Claim 1 or 2, **characterized in that** the molar masses Mn of component A) are in the range from 900 to 4000 g/mol.

4. Binder according to one or more of Claims 1 to 3, **characterized in that** component B) comprises nonlinear, branched, alkoxy-functional and/or silanol-functional polysiloxanes of the general formula 1,

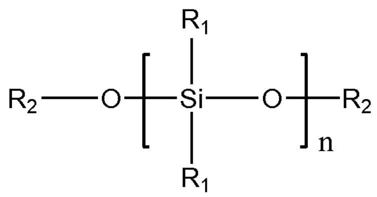

(formula 1)

in which $R_1$ independently at each occurrence are alkyl, aryl or alkoxy groups, hydroxyl or $-OSi(R_3)_3$ groups, where $R_3$ independently at each occurrence may be alkyl, aryl or alkoxy groups, hydroxyl or $-OSi(R_3)_3$ groups, and where $R_2$ independently at each occurrence may be hydrogen, alkyl groups or aryl groups, and n is > 1.

5. Binder according to one or more of Claims 1 to 4, **characterized in that** aromatic, aliphatic or cycloaliphatic dicarboxylic or polycarboxylic acids and their derivatives are used as component C).

6. Binder according to one or more of Claims 1 to 5, **characterized in that** ethylene glycol, propanediols, butane-1,4-diol, hexane-1,6-diol, neopentyl glycol, trimethylolpropane, pentaerythritol, ditrimethylolpropane, perhydrobisphenol A, dimethylolcyclohexane and 3(4),8(9)-dihydroxymethyltricyclo[5.2.1.02,6]decane (TCD Alcohol DM) are used as diols or polyols D).

7. Binder according to one or more of Claims 1 to 6, **characterized in that** the weight ratio of component A) to the polyester constituent comprising components C) and D) is 1:9 to 9:1.

8. Process for preparing binders according to Claim 1, in which a hydroxy-functional acrylate resin A), an alkoxy- and/or silanol-functional polysiloxane B), one or more dicarboxylic or polycarboxylic acids C) and one or more diols or polyols D) are reacted with one another via a polycondensation.

9. Process according to Claim 8, **characterized in that** an esterification catalyst is used in the polycondensation reaction of components A) to D).

10. Process according to Claim 8 or 9, **characterized in that** the binders are reacted with di- or polyisocyanates, isocyanatosilanes and/or aminosilanes.

11. Use of the binders according to one or more of Claims 1 to 7 in coatings.

12. Coating systems comprising coating compositions according to one or more of Claims 1 to 7.

13. Coatings according to Claim 12, **characterized in that** they are 1- or 2-component coatings.

## Revendications

1. Liant à base d'une résine d'acrylate A) fonctionnalisée par des groupes hydroxy, d'un polysiloxane B) fonctionnalisé par alcoxy et/ou silanol, d'un ou de plusieurs acides dicarboxyliques ou polycarboxyliques C) et d'un ou de plusieurs diols ou polyols D), les constituants A) à D) se trouvant sous forme condensée dans le liant, le liant étant constitué par 10 à 50% en poids de composant B) et par 50-90% en poids d'une combinaison de composant A) et du composant polyester de C) et de D), par rapport à la teneur en solides du liant.

2. Liant selon la revendication 1, **caractérisé en ce que** les résines d'acrylate A) fonctionnalisées par des groupes

hydroxy contiennent ou sont préparées à partir de :

35 à 50% en poids de composés aromatiques de vinyle,
10 à 25% en poids d'un ou de plusieurs esters hydroxyalkyliques de l'acide (méth)acrylique,
5 à 20% en poids d'un ou de plusieurs esters alkyliques de l'acide (méth)acrylique,
3 à 10% en poids d'acide acrylique et/ou d'acide méthacrylique et
12 à 30% en poids d'un ester glycidylique d'un acide monocarboxylique aliphatique saturé comprenant 9-12 atomes de carbone, qui est ramifié au niveau de l'atome de carbone en position alpha,

à chaque fois par rapport au poids total du composant A).

3. Liant selon la revendication 1 ou 2, **caractérisé en ce que** les masses molaires Mn du composant A) se situent dans la plage de 900 à 4000 g/mole.

4. Liant selon l'une ou plusieurs des revendications 1 à 3, **caractérisé en ce qu'**il s'agit, pour le composant B), de polysiloxanes non linéaires, ramifiés, fonctionnalisés par alcoxy et/ou silanol de formule générale 1,

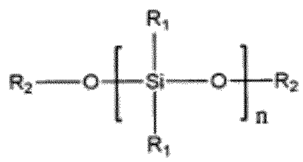

Formule 1

dans laquelle les radicaux $R_1$ représentent, indépendamment l'un de l'autre, des groupes alkyle, aryle ou alcoxy, des groupes hydroxy ou $-OSi(R_3)_3$, $R_3$ pouvant représenter, indépendamment les uns des autres, des groupes alkyle, aryle, alcoxy, des groupes hydroxy ou - $OSi(R_3)_3$,
et les radicaux $R_2$ pouvant représenter, indépendamment l'un de l'autre, hydrogène, des groupes alkyle ou des groupes aryle et $n > 1$.

5. Liant selon l'une ou plusieurs des revendications 1 à 4, **caractérisé en ce qu'**on utilise, comme composant C), des acides dicarboxyliques ou polycarboxyliques aromatiques, aliphatiques ou cycloaliphatiques et leurs dérivés.

6. Liant selon l'une ou plusieurs des revendications 1 à 5, **caractérisé en ce qu'**on utilise, comme diols ou polyols D), l'éthylèneglycol, les propanediols, le butanediol-1,4 ; l'hexanediol-1,6 ; le néopentylglycol, le triméthylolpropane ; le pentaérythritol ; le di-triméthylolpropane, le perhydrobisphénol A ; le diméthylolcyclohexane et le 3(4),8(9)-dihydroxyméthyl-tricyclo[5.2.1.02.6]décane (TCD-alcool-DM).

7. Liant selon l'une ou plusieurs des revendications 1 à 6, **caractérisé en ce que** le rapport pondéral du composant A) au constituant polyester des composants C) et D) vaut 1:9 à 9:1.

8. Procédé pour la préparation de liants selon la revendication 1, une résine d'acrylate A) fonctionnalisée par des groupes hydroxy, un polysiloxane B) fonctionnalisé par alcoxy et/ou silanol, un ou plusieurs acides dicarboxyliques ou polycarboxyliques C) et un ou plusieurs diols ou polyols D) étant amenés à réagir les uns avec les autres via une polycondensation.

9. Procédé selon la revendication 8, **caractérisé en ce qu'**on utilise, lors de la réaction de polycondensation des composants A) à D), un catalyseur d'estérification.

10. Procédé selon la revendication 8 ou 9, **caractérisé en ce que** les liants sont transformés avec des diisocyanates ou des polyisocyanates, des isocyanatosilanes et/ou des aminosilanes.

11. Utilisation des liants selon l'une ou plusieurs des revendications 1 à 7 dans des revêtements.

12. Revêtements contenant des liants selon l'une ou plusieurs des revendications 1 à 7.

13. Revêtements selon la revendication 12, **caractérisés en ce qu'**il s'agit de revêtements à 1 ou à 2 composants.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0006517 A
- EP 1247823 A
- WO 2005100482 A